# FASCICULE DE BREVET EUROPEEN

(11) **EP 1 904 361 B1**
(45) Date de publication et mention de la délivrance du brevet: **03.06.2009**
(21) Numéro de dépôt: 06778715.0
(22) Date de dépôt: 29.06.2006
(51) Int. Cl.: B62D 25/08, B60Q 1/00

(54) **ENSEMBLE DE BLOC AVANT POUR UN VEHICULE ET VEHICULE COMPRENANT UN TEL ENSEMBLE**
ANORDNUNGSEINHEIT FÜR EIN FAHRZEUG UND DAMIT VERSEHENES FAHRZEUG
ASSEMBLY UNIT FOR A VEHICLE AND A VEHICLE PROVIDED THEREWITH

(30) Priorité: 08.07.2005 FR 0507345
(43) Date de publication de la demande: 02.04.2008
(73) Titulaire: Faurecia Bloc Avant, 92000 Nanterre (FR)
(72) Inventeur: RIVIERE, Caroline, F-25700 Valentigney (FR); BERNE, Sébastien, F-70400 Luze (FR)
(74) Mandataire: Domenego, Bertrand
(86) Numéro de dépôt international: PCT/FR2006/001523
(87) Numéro de publication internationale: WO 2007/006888

(56) Documents cités:
- EP-A- 1 232 932
- FR-A- 2 787 410
- FR-A- 2 873 649
- FR-A- 2 873 652
- US-A1- 2003 062 148
- PATENT ABSTRACTS OF JAPAN vol. 2002, no. 10, 10 octobre 2002 (2002-10-10) -& JP 2002 160668 A (NISSAN MOTOR CO LTD), 4 juin 2002 (2002-06-04)

## Description

La présente invention concerne un ensemble de bloc avant pour véhicule automobile, du type comprenant :
- une face avant destinée à être fixée à l'avant d'une structure de véhicule automobile ; et
- un dispositif de fixation de blocs optiques comprenant deux supports distants l'un de l'autre et destinés à supporter chacun un bloc optique, chaque support étant fixé d'une part sur la face avant et destiné à être fixé d'autre part sur une aile de carrosserie du véhicule automobile, l'élasticité de chaque support étant sensiblement supérieure à celle de la face avant pour absorber des mouvements relatifs d'ajustements de l'aile correspondante, de la face avant et/ou du bloc optique correspondant.

Le document EP 1 232 932 décrit un ensemble de bloc avant du type précité, dans lequel les supports sont constitués pas deux poutres distinctes et séparées destinées à recevoir chacune un bloc optique, chaque poutre comprenant une extrémité fixée rigidement sur la face avant et s'étendant en saillie latéralement de la face avant.

L'absorption des mouvements relatifs d'ajustements permet d'éviter qu'un défaut de continuité de surface de la partie visible du bloc optique et de l'aile correspondante ne dégrade sensiblement la qualité esthétique du véhicule.

Néanmoins, l'ajout de poutres de support de blocs optiques augmente la complexité d'assemblage de l'ensemble de bloc avant, ainsi que son coût dé fabrication.

Un but de la présente invention est de fournir un ensemble de bloc avant du type précité, qui soit de fabrication simple et de coût faible.

A cet effet, l'invention propose un ensemble de bloc avant de véhicule automobile du type précité, caractérisé en ce que le dispositif de fixation comprend au moins un élément de liaison reliant les supports et venu de matière avec les supports.

Selon d'autres modes de réalisation, l'ensemble de bloc avant comprend une ou plusieurs des caractéristiques suivantes, prise(s) isolément ou selon toutes les combinaisons techniquement possibles :
- chaque support comprend une première partie fixée sur la face avant et une deuxième partie destinée à supporter le bloc optique et à être reliée à une aile, les première et deuxième parties étant reliées entre elles par une zone venue de matière avec les première et deuxième parties, et possédant une flexibilité supérieure à celle des première et deuxième parties autour d'un axe ;
- le ou chaque élément de liaison relie entre elles les deuxièmes parties des supports ;
- le dispositif de fixation comprend une traverse s'étendant transversalement entre les supports et formant élément de liaison ;
- la traverse est reliée à chacune de ses extrémités à un support par l'intermédiaire d'un voile ;
- chaque voile s'étendant sensiblement parallèlement à un plan longitudinal médian du véhicule automobile lorsque l'ensemble de bloc avant est monté sur le véhicule automobile ; et
- il comprend au moins un parmi les éléments suivants :
   - deux blocs optiques supportés chacun par un support respectif ;
   - un renfort de bouclier destiné à être recouvert par une peau de bouclier ; et
   - une peau de bouclier.

L'invention concerne également un véhicule automobile comprenant un ensemble de bloc avant tel que défini ci-dessus.

L'invention et ses avantages seront mieux compris à la lecture de la description qui va suivre, donnée uniquement à titre d'exemple, et faite en se référant aux dessins annexés, sur lesquels :
- la figure 1 est une vue en perspective éclatée d'un ensemble de bloc avant conforme à l'invention, destiné à être fixé à l'avant d'une structure d'un véhicule automobile ;
- la figure 2 est une vue analogue à celle de la figure 1, illustrant seulement une face avant et un dispositif de fixation de blocs optiques de l'ensemble de bloc avant de la figure 1 ;
- la figure 3 est une vue éclatée analogue à celle de la figure 2 ; et
- la figure 4 est une vue analogue la figure 3, illustrant le dispositif de fixation seul.

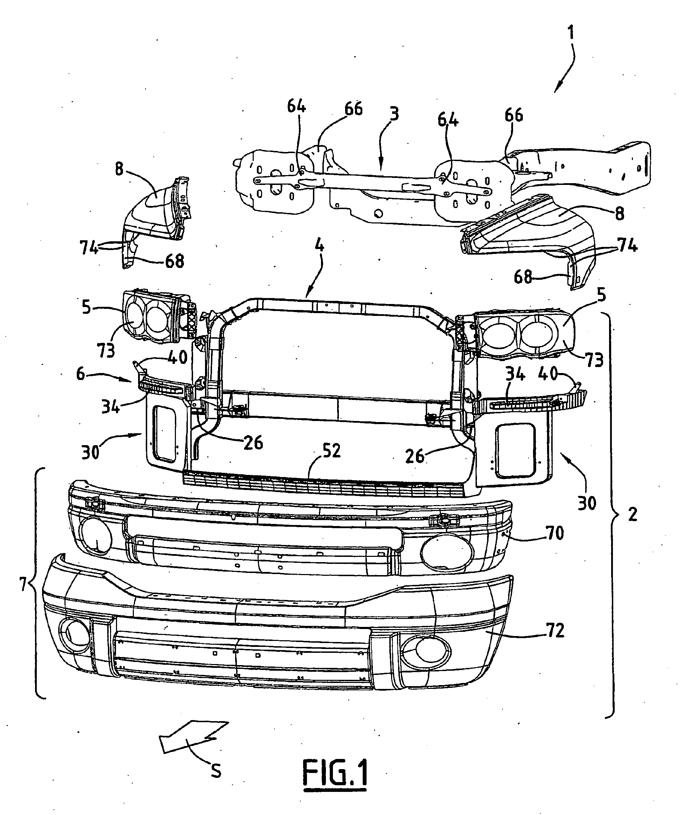

Tel qu'illustré sur la figure 1, l'ensemble de bloc avant 2 comprend une face avant 4 destinée à être fixée à l'avant d'une structure 3 d'un véhicule automobile 1, dont seule une partie avant est représentée, des blocs optiques 5, par exemple au nombre de deux, un dispositif 6 pour la fixation des blocs optiques 5 sur la face avant 4, et un bouclier 7.

Le véhicule comprend des ailes 8 de carrosserie, fixées de façon connue en soi sur la structure 3. Les ailes 8 sont découpées pour suivre les bords supérieurs et les bords latéraux extérieurs des blocs optiques 5.

Chaque bloc optique 5 comprend de façon connue en soi un boîtier sensiblement étanche comprenant une glace transparente, et renfermant un ou plusieurs projecteurs, tel que des feux de croisement, des feux de routes, des feux de brouillards et/ou des feux de clignotant.

Dans la suite de la description, les orientations utilisées sont les orientations usuelles des véhicules automobiles.

Ainsi, les termes « avant », « arrière », « longitudinal », « transversal », « latéral », « inférieur », « supérieur », « haut » et « bas » s'entendent par rapport à la direction et au sens de déplacement du véhicule automobile en marche avant, illustré par une flèche S sur la figure 1.

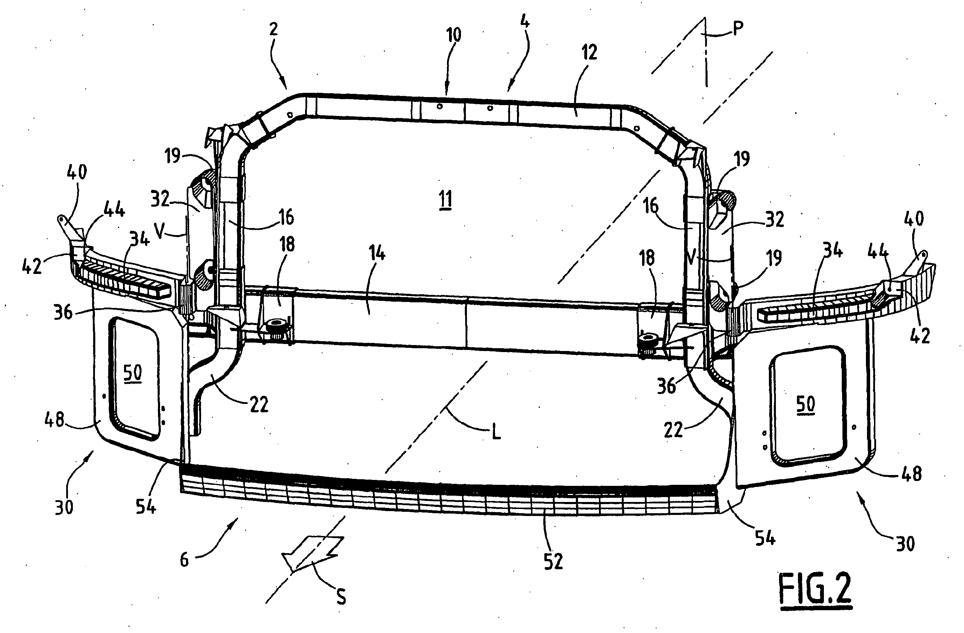

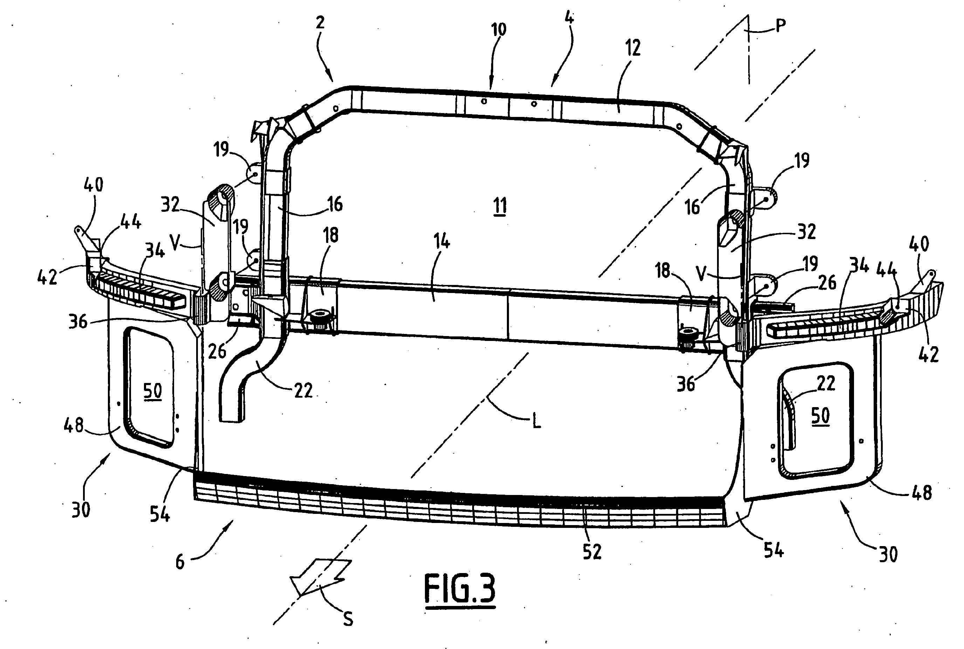

Tel qu'illustrée sur les figures 2 et 3, la face avant 4 est essentiellement rigide et comprend un cadre 10 s'étendant transversalement à la direction longitudinale L du véhicule.

Le cadre 10 délimite une ouverture centrale 11, et comporte une traverse supérieure 12 et une traverse inférieure 14, horizontales et transversales, reliées entre elles par deux montants latéraux 16 verticaux.

Les montants 16 et la traverse 12 sont par exemple venus de matière et obtenus par cintrage en U renversé d'un tube métallique. La traverse 14 est par exemple un tube métallique.

La traverse 14 est fixée rigidement aux montants 16 par l'intermédiaire d'attaches 18 en matière plastique, obtenues par exemple par surmoulage de matière plastique sur les montants 16 et la traverse 14 préalablement disposés dans un moule. Les attaches 18 entourent les montants 16 et la traverse 14.

La face avant 4 est dite « hybride » du fait de l'utilisation combinée de métal et de plastique.

La face avant 4 comprend deux paires de pattes 19 (figure 3) de fixation du dispositif 6 sur la face avant 4. Chaque paire est disposée sur un montant 16 respectif, les pattes 19 (figures 3) s'étendant en saillie du montant 16 correspondant latéralement vers l'extérieur de la face avant 4. Les pattes 19 (figure 3) sont par exemple venues de matière avec les attaches 18.

Chaque montant 16 possède une portion d'extrémité inférieure 22 prolongeant le montant 16 vers le bas à partir de la traverse 14.

La traverse 14 comprend des portions d'extrémités latérales 26 (figure 3) prolongeant latéralement la traverse 14 vers l'extérieur à partir des montants 16.

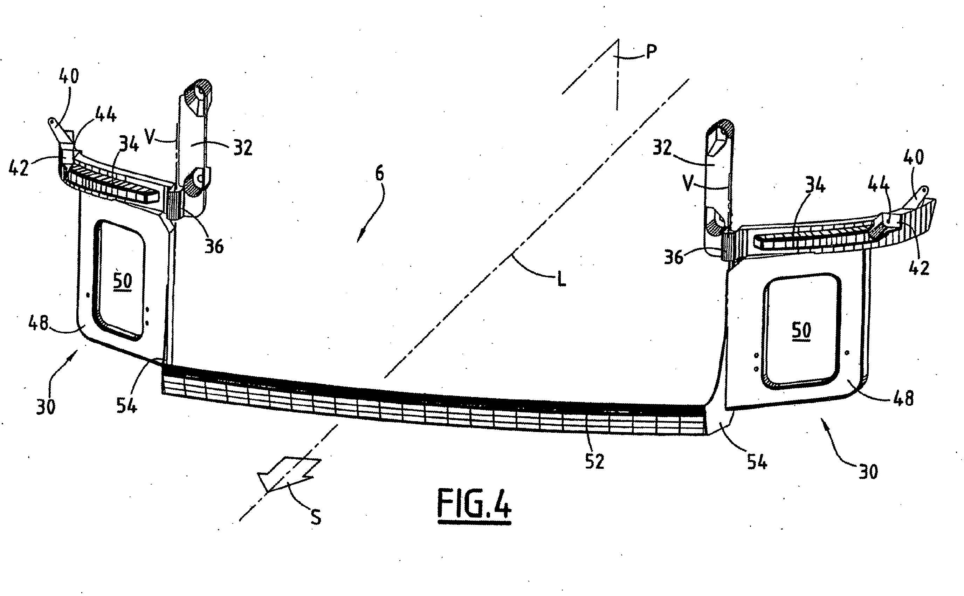

Tel qu'illustré sur les figures 2 à 4, le dispositif 6 comprend deux supports 30 espacés latéralement l'un de l'autre, et disposés de chaque côté latéralement de la face avant 4 (figures 2 et 3). Chaque support 30 est destiné à supporter un bloc optique 5 (figure 1).

Chaque support 30 comprend un montant 32 vertical, et une poutre 34 allongée s'étendant horizontalement et latéralement vers l'extérieur à partir d'une extrémité inférieure du montant 32, et destinée à supporter un bloc optique 5.

Chaque poutre 34 est venue de matière avec le montant 32 correspondant et est reliée au montant 32 par une zone 36 flexible autour d'un axe vertical V venue de matière avec le montant 32 et la poutre 34. La zone 36 possède une flexibilité autour de l'axe V sensiblement supérieur à celles du montant 32 et de la poutre 34 qu'elle relie.

Chaque zone 36 se présente sous la forme d'un film de matière de faible épaisseur transversalement à l'axe V, pouvant se déformer sans rompre pour permettre un pivotement de chaque poutre 34 par rapport au montant 32 correspondant.

Chaque poutre 34 comprend une extrémité opposée au montant 32 recourbée vers l'arrière, et possédant une patte 40 de fixation de la poutre 34 sur une aile 8 (figure 1).

Pour la fixation du bloc optique 5 correspondant, chaque poutre 34 possède un évidement 42 destiné à recevoir une patte de fixation du bloc optique 5, l'évidement 42 présentant un fond muni d'un trou 44 pour le passage d'un organe de fixation, par exemple une vis.

Chaque support 30 comprend une platine 48 venue de matière avec la poutre 34 et prolongeant la poutre 34 verticalement vers le bas. Chaque platine 48 se déplace conjointement à la poutre 34 correspondante par rapport au montant 32 correspondant.

Chaque platine 48 est munie d'une lumière 50 de réception d'un organe fonctionnel du véhicule automobile, par exemple un feu anti-brouillard.

Le dispositif 6 comprend une traverse 52 reliant les supports 30, et venue de matière avec ceux-ci. La traverse 52 est allongée et s'étend horizontalement et transversalement entre les supports 30. La traverse 52 est reliée à chacune de ses extrémités à une platine 48 par un voile 54. Chaque voile 54 s'étend verticalement et sensiblement parallèlement à un plan longitudinal P du véhicule automobile.

La traverse 52 est décalée vers l'avant par rapport aux supports 30, et se situe à hauteur de l'extrémité inférieure des platines 48.

Comme illustré plus précisément sur la figure 2, lorsque le dispositif 6 est fixé sur la face avant 4, les montants 32 sont fixés rigidement sur la face avant 4. Pour ce faire, les montants 32 sont disposés le long des montants 16, et fixés sur les pattes 19 à l'aide d'organes de fixation, par exemple des boulons, de vis et/ou de rivets.

Les poutres 34 s'étendent en saillie latéralement vers l'extérieur à partir de la face avant 4.

Le dispositif 6 comprenant une traverse 52 reliant les supports 30 facilite la fabrication du dispositif 6 et son montage sur le face avant 4.

En effet, le dispositif 6 est manipulable d'un seul tenant, et une seule opération de positionnement du dispositif 6 par rapport à la face avant 4 est nécessaire.

En outre, le dispositif 6 est monobloc et obtenu facilement et à faible coût en une seule opération, par exemple par moulage par injection de matière plastique.

Tel qu'illustré sur le figure 1, l'ensemble 2 est destiné à être fixé rigidement à la structure 3 en fixant les portions 26 (figure 3) sur les extrémités avant 64 de longerons 66 de la structure 3. La face avant 4 complète ainsi la structure 3 pour obtenir un ensemble structurel rigide.

Les blocs optiques 5 sont fixés sur les poutres 34.

Les pattes 40 sont fixées rigidement sur des rebords 68 des ailes 8, rentrant vers l'intérieur.

Le bouclier 7 comprend un renfort de bouclier 70 et une peau de bouclier 72 fixés sur le dispositif 6, plus précisément, sur les supports 30 et/ou la traverse 52, de façon que la peau 72 recouvre le renfort 70. Le renfort 70 permet d'amortir des chocs reçus par la peau 72.

Du fait des tolérances de fabrication, le positionnement des ailes 8 par rapport à la face avant 4 est imprécis, et des discontinuités de surface risquent d'apparaître entre la paroi visible des blocs optiques 5, constituée par une glace 73, et des bords 74 des ailes 8 longeant la glace 73.

L'élasticité conférée à chaque support 30 par la matière constituant le dispositif 6 et par la zone 36, permet un déplacement de la poutre 34 par rapport au montant 32 correspondant qui est fixé sur la face avant 4.

Par conséquent, les ajustements relatifs entre les ailes 8, la face avant 4 et les blocs optiques 5 sont compensés par un léger déplacement des poutres 34. Il s'ensuit que la continuité de surface entre la glace 73 de chaque bloc optique 5 et l'aile 8 adjacente est améliorée, sans qu'il soit nécessaire d'ajuster manuellement la position des blocs optiques 5.

En variante, chaque support 30 est dépourvu de zone flexible entre son montant 32 et sa poutre 34, et seule l'élasticité de la matière constituant le dispositif 6 confère l'élasticité suffisante au support 30, et notamment à la poutre 34 pour compenser les ajustements.

Les voiles 54 sont suffisamment minces pour se déformer latéralement de façon que la traverse 52 reliant les support 30 ne gêne pas le déplacement des poutres 34. Néanmoins, ces voiles 54 verticaux offrent une résistance suffisante aux efforts verticaux. Par conséquent, il est possible d'utiliser la traverse 52 comme support de la peau 72 et/ou du renfort 70:

L'ensemble 2 est préfabriqué en intégrant la face avant 4 et le dispositif 6, et, optionnellement, les blocs optiques 5, le renfort 70 et/ou la peau 72.

## Revendications

1. Ensemble de bloc avant pour véhicule automobile, du type comprenant :
- une face avant (4) destinée à être fixée à l'avant d'une structure (3) de véhicule automobile ; et
- un dispositif (6) de fixation de blocs optiques (5) sur la face avant (4), comprenant deux supports (30) distants l'un de l'autre et destinés à supporter chacun un bloc optique (5), chaque support (30) étant fixé d'une part sur la face avant (4) et destiné à être fixé d'autre part sur une aile (8) de carrosserie du véhicule automobile, l'élasticité de chaque support (30) étant sensiblement supérieure à celle de la face avant (4) pour absorber des mouvements relatifs d'ajustements de l'aile (8) correspondante, de la face avant (4) et/ou du bloc optique (5) correspondant,
**caractérisé en ce que** le dispositif de fixation (6) comprend au moins un élément de liaison (52) reliant les supports (30) et venu de matière avec les supports (30).

2. Ensemble selon la revendication 1, **caractérisé en ce que** chaque support (30) comprend une première partie (32) fixée sur la face avant (4) et une deuxième partie (34, 48) destinée à supporter le bloc optique (5) et à être reliée à une aile, les première (32) et deuxième (34, 48) parties étant reliées entre elles par une zone (36) venue de matière avec les première (32) et deuxième (34, 48) parties, et possédant une flexibilité supérieure à celle des première (32) et deuxième (34) parties autour d'un axe (V).

3. Ensemble selon la revendication 2, **caractérisé en ce que** le ou chaque élément de liaison (52) relie entre elles les deuxièmes parties (34,48) dès supports (30).

4. Ensemble selon l'une quelconque des revendications précédentes, **caractérisé en ce que** le dispositif de fixation (6) comprend une traverse (52) s'étendant transversalement entre les supports (30) et formant élément de liaison.

5. Ensemble selon la revendication 4, **caractérisé en ce que** la traverse (52) est reliée à chacune de ses extrémités à un support (30) par l'intermédiaire d'un voile (54).

6. Ensemble selon la revendication 5, **caractérisé en ce que** chaque voile (54) s'étendant sensiblement parallèlement à un plan longitudinal médian du véhicule automobile lorsque l'ensemble de bloc avant est monté sur le véhicule automobile.

7. Ensemble de bloc avant selon l'une quelconque des revendications précédentes, **caractérisé en ce qu'**il comprend au moins un parmi les éléments suivants :
- deux blocs optiques (5) supportés chacun par un support (30) respectif ;
- un renfort de bouclier (70) destiné à être recouvert par une peau de bouclier (72) ; et
- une peau de bouclier (72).

8. Véhicule automobile comprenant un ensemble (2) selon l'une quelconque des revendications précédentes.

## Claims

1. Front unit assembly for a motor vehicle of the type comprising:
• a front face (4) to be fastened to the front of a motor vehicle structure (3); and
• a device (6) for fastening optical units (5) to the front face (4) comprising two supports (30), which are spaced from one another and are each intended for the support of an optical unit (5), wherein each support (30) is fixed at one end to the front face (4) and is intended to be fastened at the other end to a wing (8) of the motor vehicle body, wherein the flexibility of each support (30) is appreciably higher than that of the front face (4) in order to absorb relative adjusting movements of the corresponding wing (8), the front face (4) and/or the corresponding optical unit (5), **characterised in that** the fastening device (6) comprises at least one connecting element (52) connecting the supports (30) and integral to the supports (30).

2. Assembly according to claim 1, **characterised in that** each support (30) comprises a first section (32) fastened to the front face (4) and a second section (34, 48) intended to support the optical unit (5) and to be connected to a wing, wherein the first (32) and second (34, 48) sections are connected to one another by a zone (36), which is integral to the first (32) and the second (34, 48) sections and has a flexibility that is higher than that of the first (32) and second (34) sections around an axis (V).

3. Assembly according to claim 2, **characterised in that** the or each connecting element (52) connects the second sections (34, 48) of the supports (30) to one another.

4. Assembly according to any one of the preceding claims, **characterised in that** the fastening device (6) comprises a cross bar (52), which extends transversely between the supports (30) and forms the connecting element.

5. Assembly according to claim 4, **characterised in that** the cross bar (52) is connected at each of its ends to a support (30) by means of a rib (54).

6. Assembly according to claim 5, **characterised in that** each rib (54) extends substantially parallel to a longitudinal centre plane of the motor vehicle when the front unit assembly is mounted on the motor vehicle.

7. Front unit assembly according to any one of the preceding claims, **characterised in that** it comprises at least one of the following elements:
• two optical units (5), each supported by a respective support (30);
• a bumper reinforcement (70) intended to be covered by a bumper skin (72); and
• a bumper skin (72).

8. Motor vehicle comprising an assembly (2) according to any one of the preceding claims.

## Patentansprüche

1. Anordnungseinheit für Kraftfahrzeug der Art mit:
- einer Vorderseite (4), die dafür bestimmt ist, am vorderen Teil einer Kraftfahrzeugstruktur (3) befestigt zu werden; und
- einer Vorrichtung (6) zur Befestigung von Scheinwerfern (5) an der Vorderseite (4) mit zwei voneinander beabstandet angeordneten Trägern (30), die dafür bestimmt sind, jeweils einen Scheinwerfer (5) zu tragen, wobei jeder Träger (30) einerseits an der Vorderseite (4) befestigt ist und andererseits dazu bestimmt ist, an einem Karosserieflügel (8) des Kraftfahrzeugs befestigt zu sein, wobei das Federungsvermögen jedes Trägers (30) praktisch größer ist als dasjenige der Vorderseite (4), um relative Regulierbewegungen des entsprechenden Flügels (8), der Vorderseite (4) und/oder des entsprechenden Scheinwerfers (5) abzufangen,
**dadurch gekennzeichnet, dass** die Befestigungsvorrichtung (6) zumindest ein Verbindungselement (52) aufweist, welches die Träger (30) verbindet und aus einem Stück mit den Trägern (30) besteht.

2. Einheit gemäß Anspruch 1, **dadurch gekennzeichnet, dass** jeder Träger (30) einen ersten, an der Vorderseite (4) befestigten Bereich (32) und einen zweiten Bereich (34, 48) aufweist, der dafür bestimmt ist, den Scheinwerfer (5) zu tragen und mit einem Kotflügel verbunden zu sein, wobei der erste (32) und zweite (34, 48) Bereich miteinander über eine aus einem Stück mit dem ersten (32) und zweiten (34, 48) Bereich bestehende Zone (36) verbunden sind, welche eine größere Biegsamkeit um eine Achse (V) herum besitzt als diejenige des ersten (32) und zweiten (34) Bereiches.

3. Einheit gemäß Anspruch 2, **dadurch gekennzeichnet, dass** das oder jedes Verbindungselement (52) die zweiten Bereiche (34, 48) der Träger (30) miteinander verbindet.

4. Einheit gemäß irgendeinem der vorherigen Ansprüche, **dadurch gekennzeichnet, dass** die Befestigungsvorrichtung (6) einen Querträger (52) aufweist, der sich quer zwischen den Trägern (30) erstreckt und das Verbindungselement bildet.

5. Einheit gemäß Anspruch 4, **dadurch gekennzeichnet, dass** der Querträger (52) an jedem seiner Enden mit Hilfe einer Abdeckung (54) mit einem Träger (30) verbunden ist.

6. Einheit gemäß Anspruch 5, **dadurch gekennzeichnet, dass** sich jede Abdeckung (54) praktisch parallel zu einer mittleren Längsebene des Kraftfahrzeugs erstreckt, wenn die Anordnungseinheit an dem Kraftfahrzeug angebracht ist.

7. Anordnungseinheit gemäß irgendeinem der vorherigen Ansprüche, **dadurch gekennzeichnet, dass** sie zumindest eines der nachfolgenden Elemente aufweist:
- zwei jeweils von einem jeweiligen Träger (30) getragene Scheinwerfer;
- eine Blendenverstärkung (70), die dazu bestimmt ist, von einer Blendenhaut (72) abgedeckt zu sein; und
- eine Blendenhaut (72).

8. Kraftfahrzeug mit einer Einheit (2) gemäß irgendeinem der vorherigen Ansprüche.
